# EUROPEAN PATENT APPLICATION

(11) **EP 1 434 386 A2**
(43) Date of publication of application: **30.06.2004**
(21) Application number: 03028621.5
(22) Date of filing: 15.12.2003
(51) Int. Cl.: H04L 12/26, H04L 29/06

(54) **Protocol testing system and protocol testing method**

(30) Priority: 19.12.2002 JP 2002368633
(71) Applicant: NTT DoCoMo, Inc., Tokyo 100-6150 (JP)
(72) Inventor: Fujinami, Tsutomu, Int. Prop. Dpt., NTT DoCoMo Inc, Chiyoda-ku, Tokyo 100-6150 (JP); Inamura, Hiroshi, Int. Prop. Dpt., NTT DoCoMo Inc, Chiyoda-ku, Tokyo 100-6150 (JP); Ishikawa, Taro, Int. Prop. Dpt., NTT DoCoMo Inc, Chiyoda-ku, Tokyo 100-6150 (JP); Miyake, Motoharu, Int. Prop. Dpt., NTT DoCoMo Inc, Chiyoda-ku, Tokyo 100-6150 (JP); Yokota, Kazuhisa, Int. Prop. Dpt., NTT DoCoMo Inc, Chiyoda-ku, Tokyo 100-6150 (JP)
(74) Representative: Sparing - Röhl - Henseler Patentanwälte

(57) **Abstract**

It is an object of the present invention to execute testing to accurately reproduce problems of a TCP/IP protocol without mistakes without knowledge or skilled techniques of the TCP/IP protocol and reduce effort required for carrying out testing. The traffic generation apparatus 32 sends the test traffic data 55 to the testing server apparatus 41. The response traffic data 57 which is the response data of this test traffic data 55 is processed in a pseudo-communication environment constructed in the communication network emulator apparatus 37 to reproduce problems of the TCP/IP protocol. Settings and control for realizing this reproduction are automatically carried out by the testing control apparatus 44 using predetermined setting information 45a, 45b, 45c and control information 47a, 47b and 47c.

## Description

The present invention relates to a protocol testing system and protocol testing method which reproduces problems in a TCP/IP (Transmission Control Protocol/Internet Protocol), which is an infrastructure technology of the Internet.

One of infrastructure technologies of the Internet is TCP/IP protocol. The TCP/IP protocol is implemented to various computers and also introduced to small electronic devices such as Personal Digital Assistance (PDA) and cellular phone recently. These small electronic devices can also be connected to the Internet and can run network applications. New functions are being added to the TCP/IP protocol one after another according to the needs of the Internet users, but many TCP/IP protocol problems occur as those new functions are implemented.

Developers of the TCP/IP protocol reproduces problems of the TCP/IP protocol using information on the problems informed from the user, etc., as a clue, identify the causes for the problems to correct the TCP/IP protocol implemented.

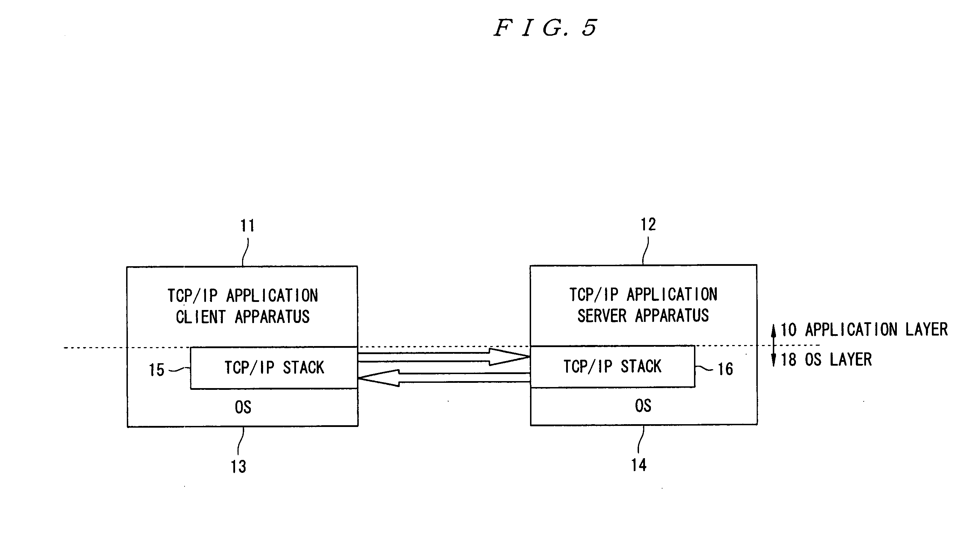

A conventional method of reproducing problems will be explained. FIG.5 shows a client apparatus-server apparatus system using a general TCP/IP application. A tester connects a client apparatus 11 of a TCP/IP application belonging to an application layer 10 to a server apparatus 12 to thereby allow the client apparatus 11 to communicate with the server apparatus 12 to test the TCP/IP protocol. In this case, the TCP/IP application uses a program which executes the TCP/IP protocol and a program belonging to levels of an OS layer 18 such as TCP/IP stacks 15 and 16 of OSs (Operating Systems) 13 and 14 to carry out a communication between the client apparatus 11 and server apparatus 12.

Reproducing problems of the TCP/IP protocol in this system requires a re-construction of the communication environment in which the problems occurred and a re-creation of the header information, parameters and traffic of the TCP/IP protocol which caused the problems.

These cannot be realized by an ordinary TCP/IP application. The former, the re-construction of the communication environment can be realized using a special network tool of a network emulator apparatus called "Dummy net" or "NIST net." These tools, that is, a network emulator apparatuses can emulate (reproduce) a bandwidth, delay and loss rate of a communication network.

The latter, the re-creation of header information, parameter and traffic of the TCP/IP protocol can be realized using a typical special tool which creates traffic called "TBIT" described in non-patent document 1 below. The TBIT is a network tool which sends specific traffic data (data to generate traffic) to a server apparatus, receives a response from the server apparatus and examines the behavior of a TCP/IP stack in the OS of the server apparatus.

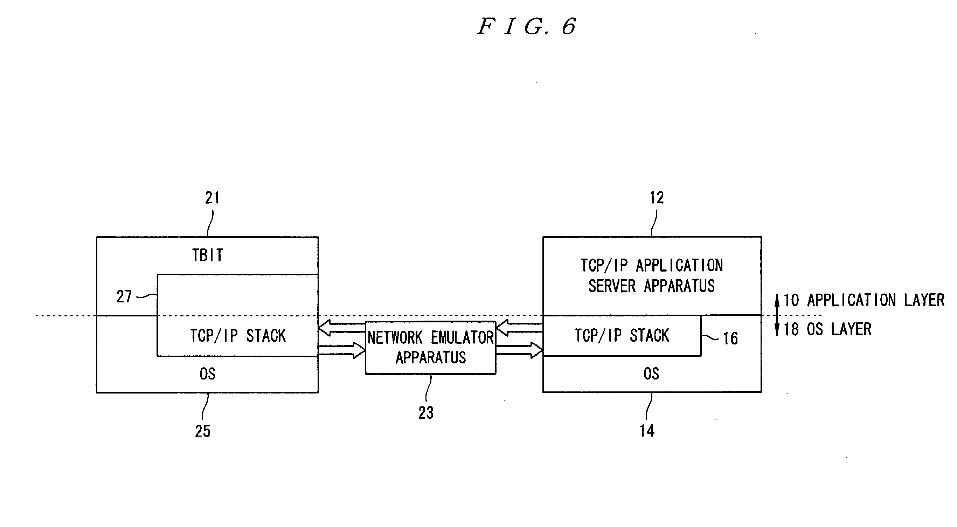

A protocol testing system combining these tools is shown in FIG.6. In this FIG.6, a TBIT 21 and a server apparatus 12 are connected in an OS layer 18 through a network emulator apparatus 23 which is the above described tool. The TBIT 21 sends specific traffic data from a TCP/IP stack 27 of an OS 25 to the server apparatus 12 through the network emulator apparatus 23 and receives a response from the server apparatus 12. In this way, problems of the TCP/IP protocol can be reproduced. Then, the behavior of the TCP/IP stack in the OS 14 of the server apparatus 12 is examined on the basis of the received response information.

### (Non-patent document 1)

June 2001, In Proceedings of SIGCOMM 2001. Or the earlier ICSI HYPERLINK "http://www.icir.org/tbit/tbit-tr.ps" Technical Report 01-002, February 2001, or the old HYPERLINK "http://www.icir.org/tbit/tbit.Ju100.ps" July 2000 version.

The TBIT 21 used in the above described conventional protocol testing system has a minimum function as a tool to reproduce problems of the TCP/IP protocol, but its principal purpose is not to reproduce problems and so the problem is that it cannot reproduce problems of the TCP/IP protocol accurately.

Furthermore, when the TBIT 21 and the tool of the network emulator apparatus 23 are combined with the TCP/IP application to construct a protocol testing system and carry out a test using this system, the tester must manually set/execute the individual tools. The problem is that the tester must be familiar with the knowledge of the TCP/IP protocol and have skilled techniques and manual intervention also requires much effort and involves latent errors.

It is an object of the present invention to provide a protocol testing system and method capable of executing tests to accurately reproduce problems of a TCP/IP protocol without mistakes, with no need to have knowledge or skilled techniques of the TCP/IP protocol and reducing effort required for carrying out tests.

This object is solved by the features of claim 1 and 10, respectively.

According to the present invention a protocol testing system for carrying out testing to reproduce problems of a protocol in a communication between a client apparatus and server apparatus, is provided comprising a generation apparatus provided with the function of the client apparatus for generating test data of a specific pattern for generating traffic with the server apparatus and sending this generated test data to the server apparatus, an emulator apparatus connected between the generation apparatus and the server apparatus for processing the test data sent from the generation apparatus to the server apparatus and response data sent from the server apparatus to the generation apparatus in response to the test data according to a pseudo-communication environment constructed in the same way as for the communication environment in which the protocol problems have occurred and a testing control apparatus which performs settings and control of the test data generation processing by the generation apparatus, the pseudo-communication environment construction processing by the emulator apparatus and the response processing for sending back the response data by the server apparatus.

According to this configuration, it is possible to process test data sent from the generation apparatus to the server apparatus and response data of this test data in a pseudo-communication environment, reproduce problems of the protocol and automatically perform settings and control for realizing this reproduction using the testing control apparatus.

Furthermore, settings and control of the test data generation processing may be performed by the generation apparatus, the pseudo-communication environment construction processing by the emulator apparatus and the response processing by the server apparatus based on predetermined setting information.

According to this configuration, it is possible to automatically perform settings for the generation apparatus, emulator apparatus and server apparatus necessary to reproduce problems of the protocol (e.g., TCP/IP protocol) using the predetermined setting information.

Furthermore, the testing control apparatus may send control information for either starting or stopping the testing to the generation apparatus, emulator apparatus and server apparatus.

According to this configuration, it is possible to start or stop testing the reproduction of problems of the protocol easily and accurately by sending control information from the testing control apparatus.

Furthermore, the testing control apparatus may control the operating states of the generation apparatus, the emulator apparatus and the server apparatus when the testing is in progress so that if abnormalities occur in at least one of the generation apparatus, the emulator apparatus and the server apparatus, operations of all these apparatuses are stopped.

According to this configuration, when abnormalities occur in at least one of the generation apparatus, emulator apparatus and server apparatus, operations of all these apparatuses are stopped, and therefore it is possible to protect each apparatus and maintain the testing conditions so far.

Furthermore, the testing control apparatus may send parameters including information on the TCP/IP stack of the server apparatus and specific information on the packet data as the setting information to the generation apparatus and the generation apparatus creates packet data using the parameters as header information and creates the test data using at least one of these packet data.

According to this configuration, it is possible to combine a plurality of individually recognizable packet data as test data and thereby reproduce problems of various protocols.

Furthermore, the testing control apparatus may send information on a specific traffic generation pattern as the setting information to the generation apparatus and the generation apparatus sends a number of packet data according to the information on the generation pattern as the test data.

According to this configuration, it is possible to generate a specific traffic state between the generation apparatus and server apparatus through the emulator apparatus.

Furthermore, the testing control apparatus may send a repetition count of the testing as the setting information to the generation apparatus and the generation apparatus sends requests for retransmission of the response data received from the server apparatus as many times as the repetition count.

According to this configuration, a testing repetition count is set for the generation apparatus and it is thereby possible to receive response data from the server apparatus as many times as the testing repetition count and carry out testing.

Furthermore, the emulator apparatus may comprise a program for constructing the pseudo-communication environment and the testing control apparatus sends the parameter information for the program to construct the pseudo-communication environment as the setting information to the emulator apparatus.

According to this configuration, it is possible to arbitrarily set the pseudo-communication environment constructed by the emulator apparatus.

Furthermore, the server apparatus may comprise a response program for testing to send back the response data in response to the test data and the testing control apparatus sends the parameter information for the response program to carry out the response processing as the setting information to the server apparatus.

According to this configuration, it is possible to arbitrarily set the response operation for the test data carried out by the server apparatus at the time of testing.

The protocol testing method carries out testing to reproduce problems of a protocol in a communication between a client apparatus and server apparatus comprising a generating step of generating test data of a specific pattern which generates traffic with the server apparatus and sending the generated test data to the server apparatus, an emulating step of processing the test data generated in the generating step and the response data sent back from the server apparatus in a pseudo-communication environment identical to the communication environment in which the problems of the protocol have occurred and a test controlling step of performing settings and control for executing the test data generation processing in the generating step, the pseudo-communication environment constructing processing in the emulating step and response processing at the server apparatus.

Thus, it is possible to process the test data sent to the server apparatus and the response data of this test data in the pseudo-communication environment, reproduce problems of the protocol and thereby automatically perform settings and control for this reproduction.

The invention will be explained in detail in connection with the attached drawings.
FIG. 1 is a block diagram showing a configuration of a protocol testing system.
FIG. 2 is a block diagram showing a configuration of a testing control apparatus of the protocol testing system of Fig. 1.
FIG. 3 is a block diagram showing a configuration of a traffic generation apparatus of the protocol testing system of Fig. 1.
FIG. 4 is a flow chart illustrating a testing operation to reproduce problems of a TCP/IP protocol using the protocol testing system of Fig. 1.
FIG. 5 is a client apparatus - server apparatus system using a general TPC/IP application.
FIG. 6 is a block diagram showing a configuration of a conventional protocol testing system.

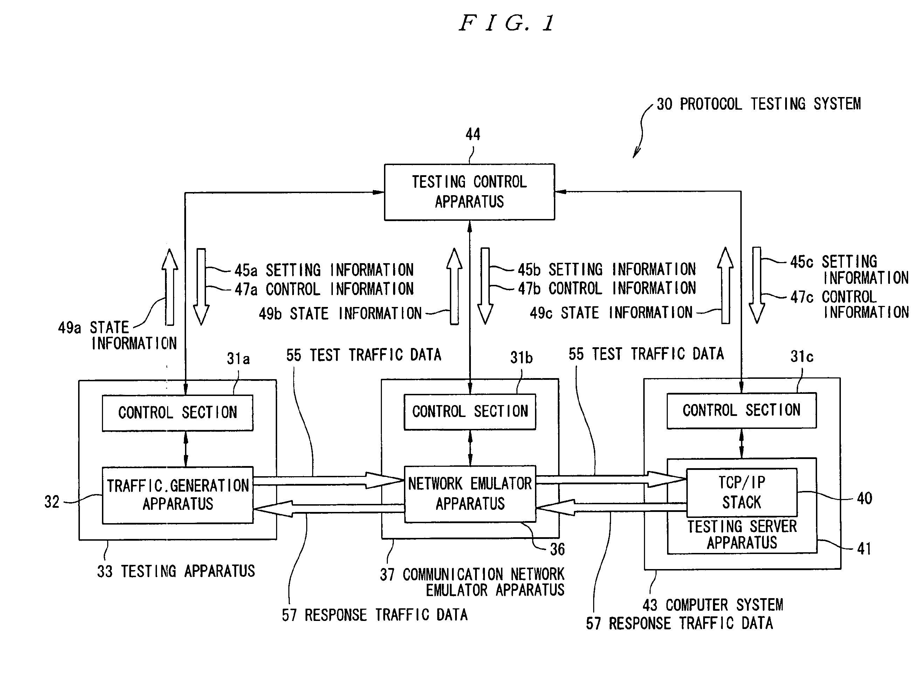

A protocol testing system 30 as shown in FIG.1 comprises a testing apparatus 33 provided with a control section 31a and a traffic generation apparatus 32, a communication network emulator apparatus 37 provided with a control section 31b and a network emulator apparatus 36, a computer system 43 provided with a testing server apparatus 41 having a TCP/IP stack 40 and a control section 31c, wherein the traffic generation apparatus 32 is connected to the testing server apparatus 41 through the network emulator apparatus 36 and the testing control apparatus 44 is connected to the respective control sections 31a, 31b and 31c.

The respective control sections 31a, 31b and 31c are provided with interface functions of the traffic generation apparatus 32, network emulator apparatus 36 and testing server apparatus 41 under the control of the testing control apparatus 44.

The testing apparatus 33 has the function of transmitting/receiving the setting information 45a, control information 47a and state information 49a to/from the testing control apparatus 44 through the control section 31a and operating the traffic generation apparatus 32.

The communication network emulator apparatus 37 has the function of transmitting/receiving setting information 45b, control information 47b and state information 49b to/from the testing control apparatus 44 through the control section 31b and operating the network emulator apparatus 36.

The computer system 43 has the function of transmitting/receiving setting information 45c, control information 47c and state information 49c to/from the testing control apparatus 44 through the control section 31 c and controlling the testing server apparatus 41.

The testing control apparatus 44 controls the traffic generation apparatus 32, network emulator apparatus 36 and testing server apparatus 41 through the control sections 31a, 31b and 31c and automatically executes testing to reproduce problems of the TCP/IP protocol. The testing control apparatus 44 further sends the setting information 45a, 45b, 45c and control information 47a, 47b and 47c to the apparatuses 32, 36 and 41 and receives the state information 49a, 49b and 49c from the apparatuses 32, 36 and 41 as response to this. Then, the testing control apparatus 44 controls the auto testing process based on the state information 49a, 49b and 49c to reproduce problems of the TCP/IP protocol at the TCP/IP stack 40 of the testing server apparatus 41 which is to be tested.

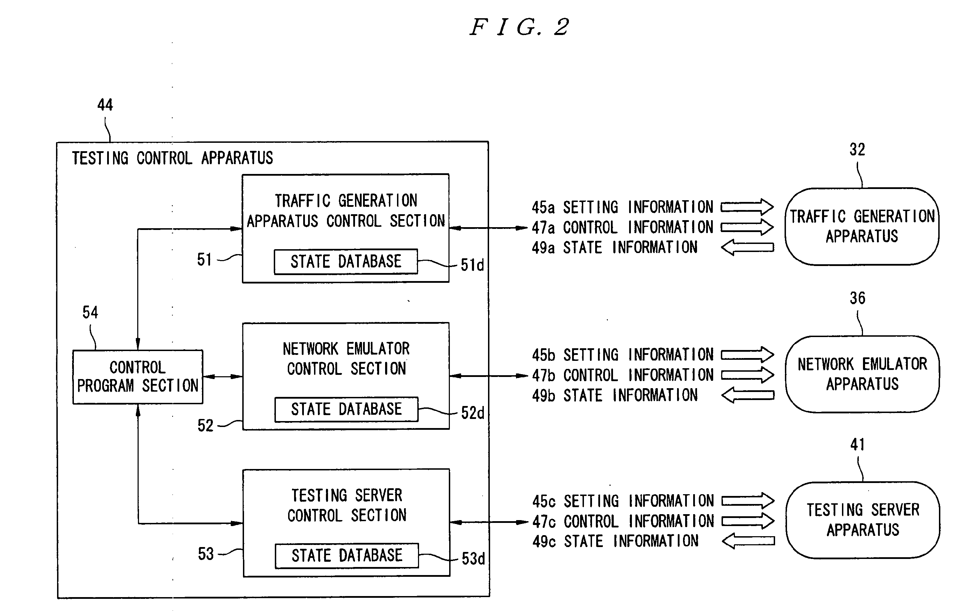

As shown in FIG.2, this testing control apparatus 44 comprises a traffic generation apparatus control section 51, a network emulator apparatus control section 52, a testing server apparatus control section 53 and a control program section 54 which manages/controls these control sections 51 to 53. The respective control sections 51 to 53 are connected to the traffic generation apparatus 32, network emulator apparatus 36 and testing server apparatus 41 and contain state databases 51d, 52d and 53d for storing the state information 49a, 49b and 49c of these apparatuses 32, 36 and 41.

The control program section 54 keeps track of testing processes by controlling these state databases 51 d to 53d and when abnormal information is transmitted to the control program section 54 because of abnormal conditions encountered at any one of the apparatuses 32, 36 and 41, the control program section 54 also has the emergency stop function of interrupting other apparatuses 32, 36 and 41.

Furthermore, the testing control apparatus 44 has the function of making preparations before starting a test. This function sends information describing TCP parameters which become the source of header information of traffic data, pattern information (hereinafter referred to as "traffic generation pattern information") for generating specific traffic and information for repeating tests a desired number of times (hereinafter referred to as "test repetition count") as the setting information 45a from the traffic generation apparatus control section 51 to the traffic generation apparatus 32. Furthermore, this function further sends program setting parameters (communication environment parameters) for constructing a pseudo-communication environment, that is, values such as bandwidth , delay, loss rate, queue length and jitter as the setting information 45b from the network emulator apparatus control section 52 to the network emulator apparatus 36. Furthermore, this function sends program setting parameters of the testing server apparatus 41 as the setting information 45c from the testing server apparatus control section 53 to the testing server apparatus 41. The respective apparatuses 32, 36 and 41 receive the transmitted setting information 45a, 45b and 45c and perform settings for testing.

Furthermore, the testing control apparatus 44 has the function of sending the control information 47a for instructing a start of transmission of test traffic data from the traffic generation apparatus control section 51 to the traffic generation apparatus 32 at the start of testing, sending the control information 47b for instructing a start of the pseudo-communication environment program from the network emulator apparatus control section 52 to the network emulator apparatus 36 and sending the control information 47c for instructing a start of the testing server apparatus program from the testing server apparatus control section 53 to the testing server apparatus 41. Furthermore, the testing control apparatus 44 also has the function of sending the control information 47a, 47b and 47c for instructing the apparatuses 32, 36 and 41 to stop.

The traffic generation apparatus 32 corresponds to the client apparatus, generates test traffic data 55 for reproducing problems of the TCP/IP protocol as shown in FIG.1, sends this test traffic data 55 to the testing server apparatus 41 which is to be tested through the communication network emulator apparatus 37 and receives the response traffic data 57 from the testing server apparatus 41. According to the state of this response traffic data 57 and testing condition set in the setting information 45a, the traffic generation apparatus 32 has the function of requesting the testing server apparatus 41 to retransmit the response traffic data 57 and obtaining problems of a desired protocol.

The network emulator apparatus 36 constructs a pseudo-communication environment identical to the communication environment in which problems of the TCP/IP protocol have occurred. This pseudo-communication environment is set by the setting parameters of the pseudo-communication environment program sent from the network emulator apparatus control section 52 as the setting information 47a. Furthermore, the pseudo-communication environment function communicates the test traffic data 55 or response traffic data 57 in the same communication environment as that in which problems of the TCP/IP protocol have occurred and transfers the traffic data to the server apparatus 12 or traffic generation apparatus 32. Furthermore, the state of the pseudo-communication environment during testing is not fixed and is programmed so as to change momentarily as in the case of an actual communication environment.

The testing server apparatus 41 is a TCP/IP application server apparatus and operates based on the TCP/IP application which receives a request from the client apparatus and sends back a specific file to the client apparatus according to the instruction of the request. This protocol testing system 30 receives the test traffic data 55 corresponding to the request from the traffic generation apparatus 32 and sends back the response traffic data 57. This response operation can be realized by setting the parameters sent to the testing server apparatus program as the setting information 49a. Furthermore, the head traffic data 55 of the group of test traffic data 55 sent from the traffic generation apparatus 32 includes a download request (test request information) for receiving a data file from the testing server apparatus 41. In response to the request, the testing server apparatus 41 sends the data file to the traffic generation apparatus 32 as the response traffic data 57 of the test traffic data 55 sent after the request.

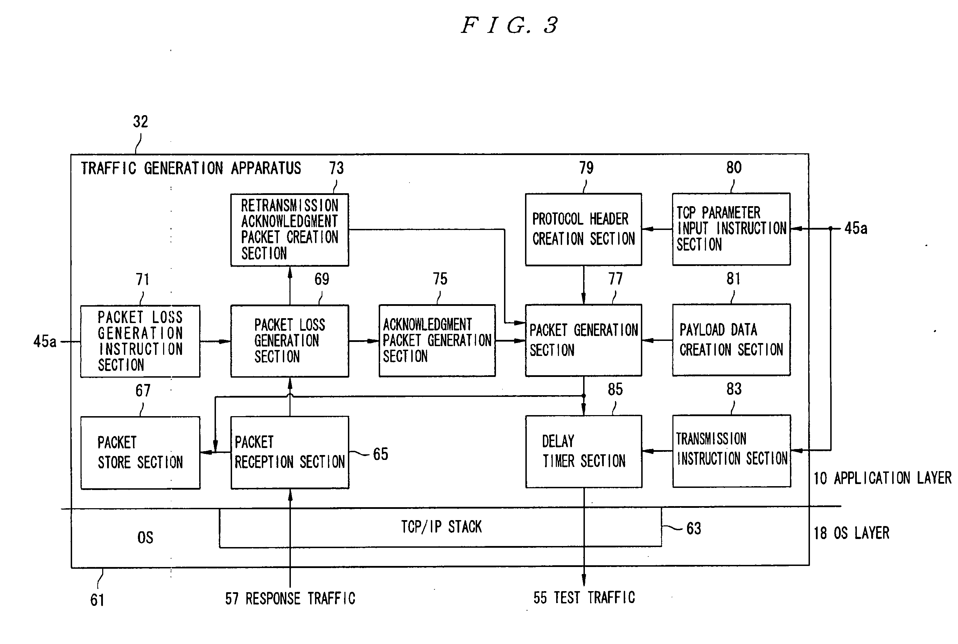

Furthermore, as shown in FIG.3, the traffic generation apparatus 32 comprises an application layer 10 which is an upper layer of an OS layer 18 including an OS61 and TCP/IP stack 63, provided with a packet reception section 65, a packet storage section 67, a packet loss generation section 69, a packet loss generation instruction section 71, a retransmission acknowledgement packet creation section 73, an acknowledgement packet creation section 75, a packet creation section 77, a protocol header creation section 79, a TCP parameter input instruction section 80, a payload data creation section 81, a transmission instruction section 83 and a delay timer section 85.

Furthermore, the traffic generation apparatus 32 divides traffic data into packet data and processes data in units of packet data.

The packet reception section 65 receives response traffic data 57, divides this into packet data, outputs the packet data to the packet storage section 67 and outputs the packet data to the packet loss generation section 69.

The packet storage section 67 stores the response packet data and stores the test packet data from the packet creation section 77. That is, the packet storage section 67 stores all packet data of the test traffic data 55 and response traffic data 57. During this storage, the packet data is stored in such a way that test packet data can be compared with response packet data which is a response to this data. All this packet data stored is used to analyse the traffic.

The packet loss generation instruction section 71 instructs the packet loss generation section 69 to generate a packet loss (hereinafter referred to as "packet loss generation instruction") according to the packet loss generation condition included in the setting information 45a from the testing control apparatus 44.

The packet loss generation instruction section 71 detects the testing repetition count sent as setting information 45a from the testing control apparatus 44 and instructs the packet loss generation section 69 to generate a packet loss as many times as the testing repetition count.

When instructed from the packet loss generation instruction section 71 to generate a packet loss, the packet loss generation section 69 processes the response packet data received by the packet reception section 65 as having been lost and when not instructed to generate a packet loss, the packet loss generation section 69 does not perform that processing. When the response packet data is treated as having been lost, the packet loss generation section 69 processes the response packet data as having been lost and outputs this processed packet loss data to the retransmission acknowledgement packet creation section 73. When the response packet data is not treated as having been lost, the packet loss generation section 69 outputs the response packet data to the acknowledgement packet creation section 75 as it is.

When the packet loss data is input from the packet loss generation section 69, the retransmission acknowledgement packet creation section 73 generates an acknowledgement packet for requesting retransmission of the lost packet that can be recognized from this packet loss data (hereinafter referred to as "retransmission request acknowledgement packet") and outputs the packet to the packet creation section 77.

When the response packet data is input from the packet loss generation section 69, the acknowledgement packet creation section 75 generates a normal acknowledgement packet (hereinafter referred to as "normal response packet") which informs the testing server apparatus 41 of the fact that this response packet data has been received and outputs the normal response packet to the packet creation section 77.

The TCP parameter input instruction section 80 outputs the TCP parameters included in the setting information 45a and TCP parameter input instruction which is an instruction for creating packet header information to the protocol header creation section 79. The TCP parameters include the port number used, packet sequence number, flag indicating the type of the packet, window size informing the data size that can be received by the TCP/IP stack and time information, etc.

The protocol header creation section 79 creates header information in response to the TCP parameter input instruction based on the TCP parameters and outputs this header information to the packet creation section 77.

The payload data creation section 81 creates payload data to be stored in the payload section of a packet and outputs the payload data to the packet creation section 77. The payload data is the first request information, etc., at the time of testing.

The packet creation section 77 creates test packet data which makes up the test traffic data 55 based on the header information from the protocol header creation section 79 and payload data from the payload data creation section 81. There are two types of test packet data created. One is packet data with only a header section storing TCP/IP protocol information which is the header information. The other is packet data made up of the header section and the payload section storing data.

The packet data with only the header section is used to check, when a communication line is connected between the traffic generation apparatus 32 and the testing server apparatus 41 for the first time, whether the line has been connected normally or not. Furthermore, the packet data made up of the header section and the payload section is used for the first request when a test is executed or when actual tests are executed thereafter.

The transmission instruction section 83 instructs the delay timer section 85 on a delay time which becomes the timing at which the test traffic data 55 is sent. This delay time is instructed with traffic generation pattern information included in the setting information 45.

The delay timer section 85 sets the delay time instructed from the transmission instruction section 83 as a time-up time, stores test packet data created by the packet creation section 77 until this set delay time times up in the order they were created and sends the stored test packet data as the test traffic data 55 when the set delay time times up. That is, a number of test packet data according to the delay time is stored and this plurality of test packet data are sent as the test traffic data 55. Thus, changing the number of test packet data makes it possible to generate a traffic state of a desired pattern.

Thus, the traffic generation apparatus 32 is designed to generate specific traffic data (test traffic data 55) to reproduce problems of the TCP/IP protocol using three elements of packet loss, TCP parameter and traffic generation pattern.

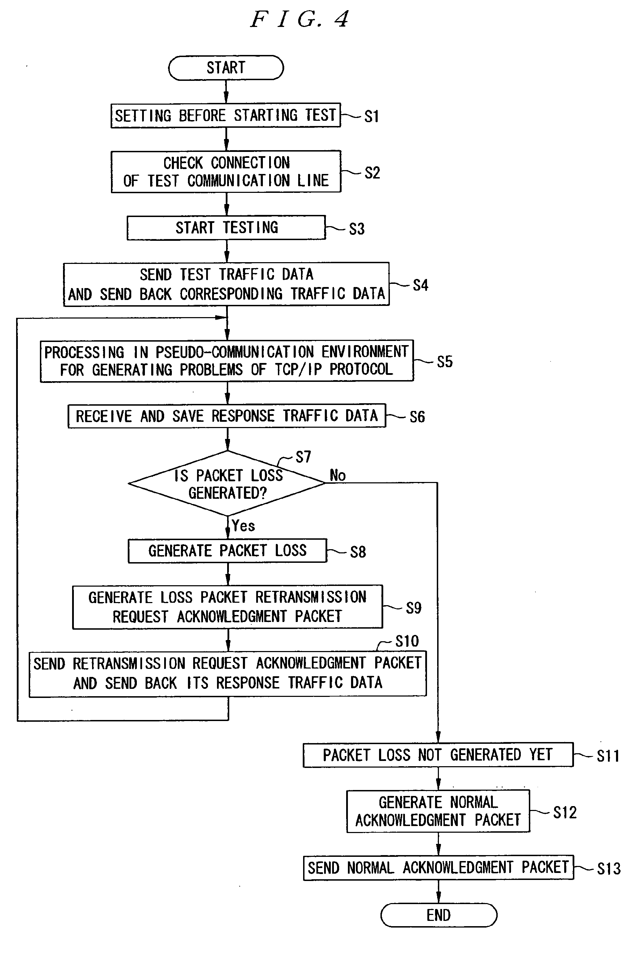

Then, the testing operation to reproduce problems of the TCP/IP protocol by the protocol testing system 30 in such a configuration will be explained using the flow chart shown in FIG.4.

In step S1, the testing control apparatus 44 makes preparations before starting a test. The traffic generation apparatus control section 51 sends the setting information 45a including TCP parameters, traffic generation pattern information and test repetition count to the traffic generation apparatus 32 through the control section 31a. Furthermore, the network emulator apparatus control section 52 sends the setting information 45b including communication environment setting parameters to the network emulator apparatus 36 through the control section 31b. Furthermore, the testing server apparatus control section 53 sends the setting information 45c including the program setting parameters of the testing server apparatus 41 to the testing server apparatus 41 through the control section 31c.

In this way, settings for testing are performed at the traffic generation apparatus 32, network emulator apparatus 36 and testing server apparatus 41. That is, the traffic generation apparatus 32 performs settings for transmitting/receiving traffic data for testing. The network emulator apparatus 36 sets parameters for the pseudo-communication environment program. The testing server apparatus 41 sets parameters for the testing server apparatus program.

After this setting, it is checked whether a test communication line between the traffic generation apparatus 32 and the testing server apparatus 41 through the network emulator apparatus 36 is normally connected or not in step S2. This checking is performed when packet data with only the header section created at the traffic generation apparatus 32 is sent.

This packet data is created as follows. At the traffic generation apparatus 32, a TCP parameter included in the setting information 45a and this TCP parameter input instruction are output from the TCP parameter input instruction section 80 to the protocol header creation section 79. In response to the TCP parameter input instruction, the protocol header creation section 79 creates header information according to TCP parameters including the transmission port number, packet sequence number, flag indicating the type of the packet, window size indicating the data size that can be received by the TCP/IP stack and time information. This header information is output to the packet creation section 77. The packet creation section 77 stores the header information in the header section and thereby creates the packet data with only the header section storing the TCP/IP protocol information. This packet data with only the header section is sent to the testing server apparatus 41 through the network emulator apparatus 36. When this transmission is performed, the delay timer section 85 remains in a through state. At the testing server apparatus 41 which has received the packet data with only the header section, its response information is sent back to the traffic generation apparatus 32 and it is checked whether the line between the traffic generation apparatus 32 and the testing server apparatus 41 through the network emulator apparatus 36 is normally connected or not. In this case, suppose the line is normally connected.

In step S3, the testing control apparatus 44 performs processing for starting a test. The testing control apparatus 44 sends the control information 47a instructing the traffic generation apparatus 32 to start transmission of the test traffic data, sends the control information 47b instructing the network emulator apparatus 36 to start the pseudo-communication environment program and the testing server apparatus control section 53 sends the control information 47c instructing the testing server apparatus 41 to start the testing server apparatus program. When the transmitted control information 47a, 47b and 47c are received by the respective apparatuses 32, 36 and 41, processing for the testing instructed with the control information 47a, 47b and 47c is started.

In step S4, the traffic generation apparatus 32 sends the test traffic data 55 with a test request attached at the head to the testing server apparatus 41 and the testing server apparatus 41 sends back the response traffic data 57 in response to the request to the traffic generation apparatus 32. In the transmission of the test traffic data 55 in this case, a number of test packet data according to the delay time set in the delay timer section 85 is stored and this plurality of test packet data are sent as the test traffic data 55.

In this case, as shown in step S5, the response traffic data 57 is processed in the pseudo-communication environment set in the network emulator apparatus 36.

As shown in step S6, this processed response traffic data 57 is received at the packet reception section 65 of the traffic generation apparatus 32, discomposed into response packet data, stored in the packet storage section 67 and output to the packet loss generation section 69.

As shown in step S7, the packet loss generation section 69 decides whether a packet loss is generated or not. Here, if the packet loss generation instruction section 71 has sent an instruction of generating a packet loss, in step S8, the response packet data received at the packet loss generation section 69 is treated as having lost and the packet loss data through this processing is output to the retransmission acknowledgement packet creation section 73.

When the packet loss data is input, the retransmission acknowledgement packet creation section 73 generates a retransmission request acknowledgement packet for requesting retransmission of the lost packet which can be recognized from the packet loss data as shown in step S9 and outputs it to the packet creation section 77.

As shown in step S10, the packet creation section 77 sends a retransmission request acknowledgement packet as the test traffic data 55 to the testing server apparatus 41 and sends back the response traffic data 57 in response to this retransmission request to the traffic generation apparatus 32. The test traffic data 55 for carrying out this retransmission request and its response traffic data 57 are processed in a pseudo-communication environment as shown in step S5, subjected to the above described processing in step S6 and then decided again in step S7 whether a packet loss has occurred or not.

Here, if no packet loss generation is instructed from the packet loss generation instruction section 71, in step S11, the packet loss generation section 69 treats the received response packet data as having not been lost. In this case, the response packet data is output to the acknowledgement packet creation section 75 as is.

In step S12, the acknowledgement packet creation section 75 which has received the response packet data from the packet loss generation section 69 creates a normal acknowledgement packet to the response packet data and outputs the normal acknowledgement packet to the packet creation section 77.

Then, in step S13, the packet creation section 77 sends a retransmission request acknowledgment packet as the test traffic data 55 to the testing server apparatus 41. This completes the testing. After the testing is completed, when new test traffic data 55 is sent to the testing server apparatus 41, the above described processing from step S3 to step S 13 is repeated.

Furthermore, when this testing is in progress, the state information 49a, 49b and 49c are sent from the traffic generation apparatus 32, network emulator apparatus 36 and testing server apparatus 41 to the testing control apparatus 44 and stored in the state databases 51d to 53d. The stored state information 49a, 49b and 49c are controlled by the control program section 54 and when abnormal conditions are encountered, for example, at the network emulator apparatus 36, other apparatuses such as the traffic generation apparatus 32 and testing server apparatus 41 are stopped in emergency by an interrupt.

Thus, according to the protocol testing system 30 according to this embodiment, the traffic generation apparatus 32 sends the test traffic data 55 to the testing server apparatus 41 and it is possible to process the response traffic data 57 which is the response data of this test traffic data 55 in a pseudo-communication environment constructed in the communication network emulator apparatus 37 and reproduce problems of the TCP/IP protocol. Settings and control for carrying out this reproduction are designed to be performed automatically by the testing control apparatus 44 using predetermined setting information 45a, 45b, 45c and control information 47a, 47b and 47c. Therefore, without having knowledge or skilled techniques of the TCP/IP protocol, it is possible to execute testing to reproduce problems of the TCP/IP protocol accurately without mistakes. Furthermore, it is possible to reduce effort required for testing.

Furthermore, since the control information 47a, 47b and 47c instructing the start or stop of testing from the testing control apparatus 44 are sent to the traffic generation apparatus 32, network emulator apparatus 36 and testing server apparatus 41, it is possible to start or stop the testing easily and accurately.

Furthermore, when testing by the testing control apparatus 44 is in progress, the operations of the traffic generation apparatus 32, network emulator apparatus 36 and testing server apparatus 41 are controlled and all the apparatuses are stopped when abnormal conditions are encountered at any one of the apparatuses, and therefore it is possible to protect the respective apparatuses from abnormalities when the testing is in progress.

Furthermore, the testing control apparatus 44 sends TCP parameters including information on the TCP/IP stack of the testing server apparatus 41 and packet data specific information as the setting information 45a to the traffic generation apparatus 32 and the traffic generation apparatus 32 creates packet data using the TCP parameters as the header information and one or two or more pieces of this packet data are used as test packet data. This allows a plurality of test packet data which are individually recognizable to be combined into the test traffic data 55 and can thereby reproduce problems of various TCP/IP protocols.

Furthermore, the testing control apparatus 44 sends specific traffic generation pattern information as the setting information 45a to the traffic generation apparatus 32 and the traffic generation apparatus 32 sends test packet data corresponding in number to the generation pattern information as the test traffic data 55. This makes it possible to generate a specific traffic state between the traffic generation apparatus 32 and testing server apparatus 41.

Furthermore, the testing control apparatus 44 sends a test repetition count as the setting information 45a to the traffic generation apparatus 32 and the traffic generation apparatus 32 sends a request for retransmission of the response traffic data 57 received from the testing server apparatus 41 as many times as the repetition count. This makes it possible to receive the response traffic data 57 from the testing server apparatus 41 an arbitrary number of times and execute testing. Furthermore, the function of repeating this testing makes it possible to execute stress tests which performs a series of tests several hundred or thousand times and attempt to reproduce problems of the protocol under heavy load.

Furthermore, the network emulator apparatus 36 is provided with a program for constructing a pseudo-communication environment and the testing control apparatus 44 sends parameter information for the program to construct the pseudo-communication environment as the setting information 45b, and it is therefore possible to arbitrarily set the pseudo-communication environment to be constructed at the network emulator apparatus 36.

Furthermore, the testing server apparatus 41 is provided with a testing response program for sending back the response traffic data 57 in response to the test traffic data 55 and the testing control apparatus 44 sends parameter information for the response program for responding as the setting information 45c to the testing server apparatus 41, and it is therefore possible for the testing server apparatus 41 to arbitrarily set a response operation to be executed at the time of testing.

The above embodiment has described the case of a TCP/IP protocol, but it is evident that the invention is also applicable to other protocols, for example, to UDP.

As described above, the generation apparatus sends test data to the server apparatus, response data which is the response result of this test data is processed in a pseudo-communication environment constructed in the emulator apparatus to reproduce problems of the protocol and settings and control for carrying out this reproduction are automatically performed by the testing control apparatus using predetermined information. Therefore, it is possible to obtain the effect of executing testing to accurately reproduce problems of the protocol without mistakes without knowledge or skilled techniques of the protocol. Furthermore, it is possible to obtain the effect of reducing effort required for carrying out testing.

## Claims

1. A protocol testing system for carrying out testing to reproduce problems of a protocol in a communication between a client apparatus and server apparatus, comprising:
a generation apparatus provided with the function of said client apparatus for generating test data of a specific pattern for generating traffic with said server apparatus and sending this generated test data to said server apparatus;
an emulator apparatus connected between said generation apparatus and said server apparatus for processing said test data sent from said generation apparatus to said server apparatus and response data sent back from said server apparatus to said generation apparatus in response to said test data according to a pseudo-communication environment constructed in the same way as for a communication environment in which said protocol problems have occurred; and
a testing control apparatus which carries out settings and control for performing said test data generation processing by said generation apparatus, said pseudo-communication environment construction processing by said emulator apparatus and response processing for sending back said response data by said server apparatus.

2. The system according to claim 1, wherein said testing control apparatus performs settings for performing said test data generation processing by said generation apparatus, said pseudo-communication environment construction processing by said emulator apparatus and said response processing by said server apparatus based on predetermined setting information.

3. The system according to claim 1 or 2, wherein said testing control apparatus sends control information for either starting or stopping said testing to said generation apparatus, said emulator apparatus and said server apparatus.

4. The system according to any one of claims 1 to 3, wherein said testing control apparatus controls the operating states of said generation apparatus, said emulator apparatus and said server apparatus when said testing is in progress so that if abnormal conditions are encountered in at least one of said generation apparatus, said emulator apparatus and said server apparatus, operations of all these apparatuses are stopped.

5. The system according to any one of claims 2 to 4, wherein said testing control apparatus sends parameters including information on the TCP/IP stack of said server apparatus and packet data specific information as said setting information to said generation apparatus, and
said generation apparatus creates packet data using said parameters as header information and creates said test data using at least one of these packet data.

6. The system according to claim 5, wherein said testing control apparatus sends information on a specific traffic generation pattern as said setting information to said generation apparatus, and
said generation apparatus sends a number of said packet data according to said information on the generation pattern as said test data.

7. The system according to any one of claims 2 to 6, wherein said testing control apparatus sends a repetition count of said testing as said setting information to said generation apparatus, and
said generation apparatus sends requests for retransmission of said response data received from said server apparatus as many times as said repetition count.

8. The system according to any one of claims 2 to 4, wherein said emulator apparatus comprises a program for constructing said pseudo-communication environment, and
said testing control apparatus sends the parameter information for said program to construct said pseudo-communication environment as said setting information to said emulator apparatus.

9. The system according to any one of claims 2 to 4, wherein said server apparatus comprises a response program for testing to send back the response data in response to said test data, and
said testing control apparatus sends the parameter information for said response program to carry out said response processing as said setting information to said server apparatus.

10. A protocol testing method for carrying out testing to reproduce problems of a protocol in a communication between a client apparatus and server apparatus, comprising
a generating step of generating test data of a specific pattern which generates traffic with said server apparatus and sending this generated test data to said server apparatus;
an emulating step of processing said test data generated in said generating step and the response data sent back from said server apparatus in a pseudo-communication environment identical to the communication environment in which the problems of said protocol have occurred; and
a test controlling step of performing settings and control for executing said test data generation processing in said generating step, said pseudo-communication environment constructing processing in said emulating step and said response processing at said server apparatus.
